# EUROPEAN PATENT APPLICATION

(11) **EP 4 631 732 A1**
(43) Date of publication of application: **15.10.2025**
(21) Application number: 23822060.2
(22) Date of filing: 08.11.2023
(51) Int. Cl.: B41J 3/407, B41J 11/00, B41J 13/00, B41J 13/02

(54) **GLASS-PRINTING MACHINE THAT PRINTS IN AN ENDLESS CONTINUOUS MOVEMENT**

(30) Priority: 05.12.2022 ES 202231045
(71) Applicant: Tecglass SL, 36500 Lalin (Pontevedra) (ES)
(72) Inventor: FERNÁNDEZ VÁZQUEZ, Juan Javier, 36500 Lalin (Pontevedra) (ES); BARROS LÓPEZ, José Manuel, 36500 Lalin (Pontevedra) (ES)
(74) Representative: Pons IP
(86) International application number: PCT/ES2023/070658
(87) International publication number: WO 2024/121445

(57) **Abstract**

Glass printer in a continuous motion comprising a printer input area (1), a scanning unit (2) for determining the position, measurement and quality of the glass or other substrate, a printing bridge (3), optionally, an output scanning unit (4) for the inspection of the print quality on the glass (or any other substrate) and an output area (5), where in addition it consists of a single transport of rollers from the input to the output of the machine passing through all the printer stations, where the rollers are actuated by a three-phase motor where the rollers are cut in several channels (6) in parallel arrangement leaving between them guide rails (7) of suction cups that run along the guide rails (7) independently of the suction cups of each guide rail (7), and where in addition, the suction cups are actuated in their displacement independently by means of a linear motor that moves linearly in a plane below the rollers and are synchronised with each other.

## Description

### OBJECT OF THE INVENTION

The object of the present invention, as the title of the invention states, is a glass printer in an endless continuous motion, i.e. it relates to a printer designed for glass where printing takes place continuously without any stops.

The present invention is characterised by the special design and configuration of each and every one of the parts that form part of the printer in such a way that a continuous printing of the glass is achieved by means of a machine simple to manufacture.

Therefore, the present invention belongs to the scope of endless continuous glass printing systems.

### BACKGROUND OF THE INVENTION

There are currently machines in the state of the art that provide a solution for printing glass or other substrates continuously and accurately. An example of continuous printing is patent ES 2902100 A1, which discloses a continuous printing system comprising a series of carriages carrying the glass to be printed, where the carriages are transported by linear motors and where the carriages, after reaching the output station, return to the input position by a lower level, having mechanisms for lowering the carriages at the output station and mechanisms for lifting the carriages at the input station.

This type of system effectively performs the function of printing continuously, quickly and accurately, but it is a system that takes up a lot of space in length and height as the carriages have to be able to move along the entire length and work on two levels.

Furthermore, the entire system of raising and lowering levels makes such machines very expensive for the end user.

Therefore, it is the object of the present invention to develop a continuous glass printing machine which overcomes the drawbacks of the state of the art, particularly those relating to the high volume and space required by the machine, in addition to the associated high manufacturing costs, by developing a machine such as the one described below and set forth in its essentiality in claim 1.

### DESCRIPTION OF THE INVENTION

The object of the present invention is essentially contained in the independent claim and the different embodiments are contained in the dependent claims.

The present invention has the object of a glass printing machine in a continuous motion, which has a printing accuracy to the edge of +/-0.2 mm or better, in more than 40% of the glasses even reaching accuracies of +/-0.08 mm from print to edge.

The printing machine comprises:
- A printer input.
- A station for viewing and determining the position, measurement and quality of the glass or other substrate.
- A printing station.
- A printer output.

As a complementary and optional feature, the machine can be equipped with a print quality inspection station on the glass or any other substrate.

The glass printer is also characterised in that it has a single roller conveyor from the input to the output of the machine passing through all the printer stations.

This single roller conveyor is actuated by a three-phase motor that is controlled by a frequency converter to control the speed or alternatively a servo motor can be used.

This single roller conveyor has one characteristic: instead of being continuous rollers from one side to the other across the width of the machine, they are cut in several channels in parallel arrangement, each one of the channels leaving suction cup guide rails between each channel.

The suction cups run on the guide rails independently of the suction cups of another guide rail. The suction cups are actuated by a linear motor that moves linearly in a plane below the rollers and are synchronised with each other in such a way that when a group of suction cups picks up a glass, it moves it forward together with the rollers, and when that glass leaves the input area, the next glass arrives and a second group of suction cups is already waiting for it, running along a different guide rail, and so on. When the first group of suction cups completes the path with the glass after printing, it releases it and returns to the pick-up position to wait its turn to pick up the next glass. This creates a continuous printing sequence managed by synchronising the movement of the suction cups along each guide rail.

The suction cup guide rails can be from 1, in which case the printing sequence would be slow, to more than 5, in which case the sequence would be completely continuous with a minimum spacing between glasses between 100 and 300 mm.

Thanks to the guide rails of the suction cups actuated by linear motors, the following is achieved:
- Prevent the glass from sliding over the drift rollers and creating a difference between the scanned glass position and the position that actually passes under the printing bridge.

This drift occurs in single pass or traditional printing systems that rely on conveyor belts, belts or rollers. This drift is due to the tendency of a conveyor belt to move slightly towards the ends of the pulleys, the same happens with belts, and with roller systems it is usually due to eccentricities that can occur in the rollers themselves.
- Prevent the glass from drifting by keeping the glass in the same position from the time it is scanned until it is printed, thanks to the fact that the glass is held in place by the suction cups on each guide rail. In this way, a print tolerance to the edge of the glass or other substrate < +/-0.2 mm is achieved.

The primary transport system can be belts or rollers, the important and fundamental part of the system being that the suction cup shuttles accompany the glass during the entire displacement to avoid its turning or drifting.

Unless indicated otherwise, all the technical and scientific elements used in this specification have the meaning usually understood by a person skilled in the art to which this invention belongs. In the practice of this invention, methods and materials similar or equivalent to those described in the specification may be used.

In the description and claims, the word "comprises" and its variants do not intend to exclude other technical characteristics, additives, components or steps. For persons skilled in the art, other objects, advantages and characteristics of the invention will be partly inferred from the description and partly from the practice of the invention.

### EXPLANATION OF THE FIGURES

In order to complement the description being made herein, and with the object of aiding the better understanding of the characteristics of the invention, in accordance with a preferred practical embodiment thereof, said description is accompanied, as an integral part thereof, by a set of drawings where, in an illustrative and non-limiting manner, the following has been represented:

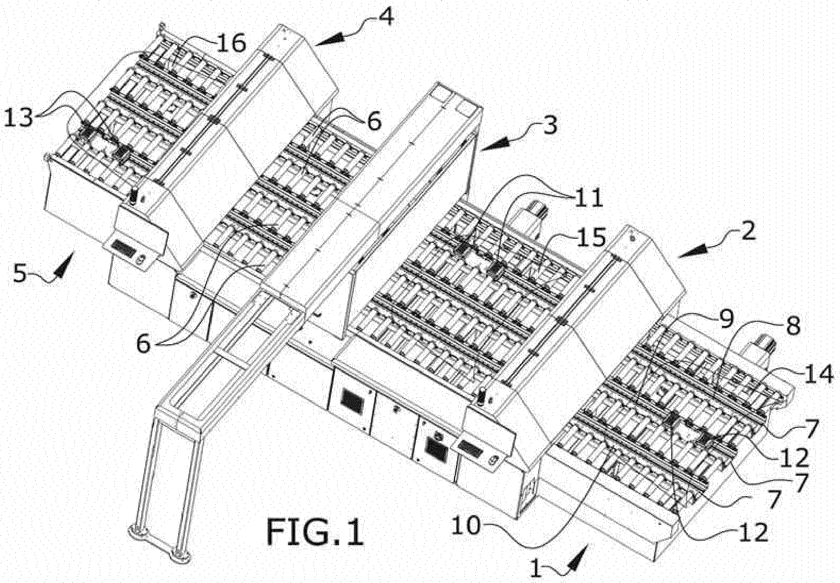

In Figure 1, we can observe a general representation of the glass printer in a continuous motion object of the invention.

### PREFERRED EMBODIMENT OF THE INVENTION

In view of the figures, a preferred embodiment of the proposed invention is described below.

In figure 1 we can observe that the glass printer object of the invention comprises:
- An input area (1).
- A scanning unit (2) for determining the position, measurement and quality of the glass or other substrate.
- A printing bridge (3).
- An output scanning unit (4) for inspection of print quality on glass (or any other substrate).
- An output area (5).

As mentioned above the output scanning unit (4) is not an essential element to the object of the invention and may be a complementary or optional element.

Where the transport is carried out by means of a single roller conveyor from the input to the output of the machine, which is actuated by a three-phase motor that is controlled by a frequency converter to control the speed or alternatively a servo motor can also be used, where this single roller conveyor, instead of being continuous rollers from one side to the other of the machine width, is cut in several roller channels (6) in parallel arrangement, each of the channels leaving between each channel guide rails of suction cups that move along these guide rails by means of linear motors in a continuous forward and backward movement.

In the representation shown, there are three guide rails (7): a first guide rail (8), a second guide rail (9) and a third guide rail (10), wherethrough a first group of suction cups (11), a second group of suction cups (12) and a third group of suction cups (13) run respectively.

In the embodiment shown, there are four roller channels (6), and in the printer input area there is a first glass (14), at the output of the scanning unit (2) there is a second glass (15) and in the output area (5) there is a third glass (16), each of them held by an independent group of suction cups (12), (11) and (13) respectively.

The suction cups (12), (11) and (13) run along the guide rails independently of the suction cups of another guide rail and are actuated by a linear motor and are synchronised with each other to achieve a continuous printing process.

Having sufficiently described the nature of the present invention, in addition to the manner in which to put it into practice, it is hereby stated that, in its essence, it may be put into practice in other embodiments that differ in detail from that indicated by way of example, and to which the protection equally applies, provided that its main principle is not altered, changed or modified.

## Claims

1. Glass printer in a continuous motion comprising:
- A printer input area (1).
- A scanning unit (2) for determining the position, measurement and quality of the glass or other substrate.
- A printing bridge (3).
- An output area (5).
**Characterised in that** it consists of a single transport of rollers from the input to the output of the machine passing through all the printer stations, where the rollers are actuated by a three-phase motor, where the rollers are cut in several channels (6) in parallel arrangement leaving between them guide rails (7) of suction cups that run along the guide rails (7) independently of the suction cups of each guide rail (7), and where in addition, the suction cups are actuated independently in their displacement by means of a linear motor that moves linearly in a plane below the rollers, and are synchronised with each other in such a way that when a group of suction cups picks up a glass it moves it forward together with the rollers, and when that glass leaves the input area, the next glass arrives and is already waiting for a second group of suction cups that runs along a different guide rail, and so on.

2. Glass printer in a continuous motion according to claim 1, **characterised in that** it additionally comprises an output scanning unit (4) for inspection of the print quality on glass or any other substrate.

## Amended claims

### Amended claims under Art. 19.1 PCT

1. Glass printer in a continuous motion comprising:
- A printer input area (1).
- A scanning unit (2) for determining the position, measurement and quality of the glass or other substrate.
- A printing bridge (3).
- An output area (5).
**Characterised in that** it consists of a single transport of rollers from the input to the output of the machine passing through all the printer stations, where the rollers are actuated by a three-phase motor, where the rollers are cut in several channels (6) in parallel arrangement leaving between them guide rails (7) of suction cups that run along the guide rails (7) independently of the suction cups of each guide rail (7), and where in addition, the suction cups are actuated independently in their displacement by means of a linear motor that moves linearly in a plane below the rollers, and are synchronised with each other in such a way that when a group of suction cups picks up a glass it moves it forward together with the rollers, and when that glass leaves the input area, the next glass arrives and is already waiting for a second group of suction cups that runs along a different guide rail, and so on.
